# DEMANDE DE BREVET EUROPEEN

(11) **EP 2 017 048 A1**
(43) Date de publication de la demande: **21.01.2009**
(21) Numéro de dépôt: 08305405.6
(22) Date de dépôt: 17.07.2008
(51) Int. Cl.: B28B 11/12

(54) **Dispositif de calibrage en hauteur d'éléments de construction**

(30) Priorité: 17.07.2007 FR 0705172
(71) Demandeur: Hess, Lorraine, 57320 Guerstling (FR)
(72) Inventeur: Backs, Ulrich, 32689 Kalletal (DE)
(74) Mandataire: Littolff, Denis

(57) **Abrégé**

Dispositif de calibrage en hauteur d'éléments de construction de type parpaings (2) en béton ou autres matériaux comportant au moins un outil d'enlèvement de matière ou d'usinage, les éléments de construction et le ou les outils étant entraînés en vue d'une interaction selon une avance de même direction et de sens opposé, le ou les outils d'enlèvement de matière étant des scies circulaires ou concaves (1) entraînées en rotation pendant la phase d'enlèvement de matière et travaillant avec l'arête tranchante du disque.

La vitesse de rotation desdits outils d'enlèvement est supérieure à 5500 tr/min.

## Description

La présente invention a trait à un dispositif de calibrage en hauteur d'éléments de construction du type parpaing en béton, en brique en terre cuite ou autre matériau reconstitué dont la résistance mécanique permet l'usinage pour obtenir des dimensions plus précises que celles obtenues lors du processus de fabrication d'origine.

Cette invention a vocation à s'appliquer par exemple à des lignes de fabrication de parpaings en béton lourd ou léger, lignes dans lesquelles ils sont initialement moulés/pressés de manière à leur donner une forme sensiblement parallélépipédique.

Cette forme, en sortie de la presse, n'est cependant pas dimensionnée de manière très précise, et peut par conséquent être considérée comme une ébauche qu'il faut ensuite calibrer. Le calibrage ne se fait en réalité qu'après une opération d'étuvage/séchage, afin que chaque parpaing soit suffisamment solide pour subir une opération d'enlèvement de matière, ou en d'autres termes d'usinage visant à le calibrer en hauteur avec une précision inférieure au millimètre.

Jusqu'ici, ce calibrage était réalisé par une opération de fraisage à l'aide de fraises cylindriques ou à disques, sur lesquels des plaquettes sont collées ou maintenues mécaniquement de sorte que l'usinage se fait avec la force du disque, le but étant d'enlever la matière superflue en hauteur. Dans la plupart des cas, les ébauches obtenues après l'opération de moulage/pressage ont une hauteur qui doit être rectifiée d'une valeur comprise entre 1 et 3 mm afin d'obtenir la valeur calibrée désirée. Plus rarement, certaines ébauches ont une hauteur qui nécessite un enlèvement plus important de matière, pouvant aller jusqu'à 6 mm en hauteur. La mise en oeuvre d'un fraisage pour réaliser le calibrage pose alors de multiples problèmes.

Ainsi, en particulier, les différences de hauteur nécessitent des vitesses et des puissances d'usinage différentes compte tenu des variations de quantité de matière à enlever. Lorsque des parpaings présentant une hauteur indésirable de 6 mm se présentent, il est par exemple nécessaire de fraiser à une vitesse plus lente et avec une puissance plus élevée. Cette opération présente en outre un plus grand risque d'endommager le parpaing compte tenu des contraintes mécaniques mises en jeu, qui rendent par ailleurs impossible une mise en oeuvre immédiatement après la phase d'étuvage/séchage. Lesdites contraintes, appliquées à des parpaings encore partiellement humides, aboutiraient en effet à les endommager sérieusement.

Quel que soit le type de fraisage employé, et en particulier lorsque les parpaings ne sont pas complètement secs, l'usinage aboutit de plus à encrasser les fraises par agglomération du matériau enlevé. Il se créé en effet une sorte de boue qui devient collante à la vitesse de fraisage, vitesse qui n'est guère élevée (entre 1000 et 2000 tr/mn au maximum) et qui est encore limitée du fait des différences de matière à enlever évoquées auparavant. Cette limitation a pour première conséquence une mauvaise évacuation de la matière usinée, problème d'autant plus important que les parpaings sont humides.

L'encrassage des fraises se traduit évidemment par une moins grande efficacité de l'usinage, et par une augmentation subséquente des risques d'endommagement des parpaings.

Sur un plan strictement économique, outre le prix élevé de chaque fraise, le procédé de calibrage qui les utilise est alourdi par l'impossibilité à le mettre en oeuvre directement sur la ligne de production. Pour aboutir à un séchage compatible avec un calibrage par fraisage, il est en effet indispensable d'extraire les parpaings de la chaîne de production après la phase d'étuvage/séchage, afin de les stocker pendant une période conseillée d'au moins 7 jours. Cette durée garantit un séchage suffisant, compatible avec un fraisage non destructif des parpaings.

La ligne de production doit donc être agrémentée d'une ligne secondaire permettant l'enlèvement des parpaings en vue de leur stockage, puis leur réintroduction ultérieure sur la ligne en vue de leur usinage. Cette ligne secondaire comporte notamment des robots de déchargement et de réinstallation de parpaings par rangées en amont de l'étage de fraisage, et elle alourdit par conséquent sensiblement les coûts de l'installation globale.

La gestion des espaces de stockage, dont la surface est loin d'être négligeable compte tenu de la durée du stockage, a par ailleurs une incidence économique qui n'est pas anodine.

L'invention se propose de remédier à ces inconvénients, en proposant la mise en oeuvre d'outils moins onéreux que des fraises, pouvant opérer à vitesse élevée constante et à puissance réduite par outil, par rapport à celles qui étaient mises en oeuvre dans les opérations de fraisage.

La solution de l'invention peut par ailleurs, et cela constitue un avantage considérable, être mise en oeuvre directement dans la ligne de production en un laps de temps très court.

Pour satisfaire à ces objectifs, le dispositif de calibrage en hauteur de l'invention, s'appliquant comme mentionné à des éléments de construction du type parpaings en béton ou en matériaux tels que mentionnés auparavant, comporte classiquement au moins un outil d'enlèvement de matière ou d'usinage, et est mis en oeuvre de telle sorte que les éléments de construction et le ou les outils sont entraînés en vue d'une interaction selon une avance relative de même direction et de sens opposé.

Le ou les outils d'enlèvement de matière sont des scies circulaires ou concaves entraînées en rotation pendant la phase d'enlèvement de matière et travaillant avec l'arête tranchante du disque.

Selon l'invention, la vitesse de rotation desdits outils d'enlèvement est supérieure à 5500 tr/min.

La vitesse de rotation élevée de l'outil permet l'usinage ou le sciage avec un effort de coupe réduit.

La réduction de l'effort de coupe permet de réaliser le calibrage sans détériorer le parpaing dans sa structure. Plus précisément, il ne détériore pas ses parois minces, alors que le temps de séchage est maintenu le plus court possible, ce qui implique que le parpaing n'a pas encore atteint sa résistance mécanique définitive, celle qu'il présente lorsqu'il est parfaitement sec.

L'utilisation de scies permet de plus un enlèvement de matière selon une hauteur quasi uniforme, au plus égale à l'épaisseur de la scie. Si la hauteur de matière à usiner est inférieure à l'épaisseur de la scie, celle-ci se comporte en quelque sorte comme une fraise à disque 3 tailles. En revanche, lorsque la hauteur de matière à prélever est supérieure à l'épaisseur de la scie, celle-ci agit comme une scie circulaire classique.

Dans tous les cas, quelle que soit la hauteur superflue, la matière à enlever n'excède donc pas une valeur prédéterminée évidemment connue à l'avance. Il est donc possible de faire fonctionner chaque scie à grande vitesse, ce qui s'avère très bénéfique non seulement en termes de vitesse d'exécution mais également pour évacuer les boues et autres agrégats de matières susceptibles de se former. Les outils sont de plus maintenus propres et sont immédiatement réutilisables dans pratiquement toutes les circonstances.

Les scies nécessitent par ailleurs des moteurs de puissance bien inférieure à ceux qui entraînent les fraises, puisque la quantité de matière à usiner est connue et limitée car n'excédant jamais l'épaisseur de l'outil. Les moyens moteurs installés peuvent par conséquent se suffire d'une puissance de 5 à 6 fois inférieure à ceux qui sont nécessaires pour l'usinage par fraisage. Enfin, les scies utilisables sont classiques et disponibles sur le marché à des prix bien inférieurs à ceux des fraises employées pour ces opérations.

Economiquement, les composants mis en oeuvre par le système de l'invention sont donc bien moins onéreux que dans les dispositifs basés sur le fraisage. La puissance consommée, bien inférieure, augmente encore l'attractivité de ce système sur un plan économique.

L'utilisation de scies à hautes vitesses, qui restent par conséquent propres et immédiatement réutilisables, permet en outre l'intégration de l'étape de calibrage directement dans une ligne de fabrication. Il est en effet possible de réaliser ce calibrage en quelques secondes sur des rangées d'éléments de construction de hauteurs différentes, puisque le travail à réaliser est presque toujours le même. Cette possibilité est extrêmement avantageuse, dans la mesure où elle permet de s'affranchir d'une ligne secondaire, ce qui revient à diminuer considérablement le prix de revient des éléments de construction produits.

Schématiquement, le coût d'un dispositif de calibrage basé sur des fraises est doublé par l'adjonction d'une ligne secondaire. Or, compte tenu que les fraises ont un coût individuel bien supérieur à celui des scies, le chiffrage d'un système de calibrage basé sur des fraises aboutit à des valeurs plus de deux fois plus élevées que pour une installation avec des scies. Sachant au surplus que la puissance mise en oeuvre pour l'entraînement des scies est bien inférieure, qu'il n'est pas besoin d'espace de stockage ni d'énergie pour une ligne secondaire, les incidences économiques du système de l'invention sont extrêmement favorables.

De préférence, selon l'invention, les scies circulaires sont choisies avec une épaisseur comprise entre 2 mm et 8 mm. Cette épaisseur donne en fait la valeur de la hauteur de matière qui est usinée, valeur connue à l'avance et qui peut être intégrée dans les calculs, notamment de puissance. Typiquement, une valeur de 3 mm est adaptée à ce type de travail.

Le dispositif de l'invention peut, par ailleurs, comporter une pluralité de scies agencées l'une à la suite de l'autre dans la direction de l'avance, et d'axe décalé de sorte qu'une portion seulement de la surface frontale de coupe soit active au moment de l'usinage, la distance entre les deux axes des scies placées aux extrémités correspondant au moins à la largeur du ou des éléments de construction à usiner.

Un tel système s'affranchit donc également de ce qui était fait jusqu'ici avec des fraises : il n'y a plus d'usinage faisant intervenir la totalité de la surface frontale de l'outil, mais seulement une partie de celle-ci. Il s'agit en quelque sorte d'un usinage tangentiel, qui permet l'utilisation de grande vitesse, car seule une portion qui peut être relativement réduite de la scie est mise en oeuvre, sans efforts frontaux d'usinage, et avec une capacité à évacuer toutes les impuretés qui empêchent la formation progressive d'agrégats de boue, diminuant progressivement l'efficacité d'usinage de l'outil.

De préférence, les axes des scies sont décalés d'un pas constant (p).

Plus précisément, les scies peuvent être disposées en V, d'axe de symétrie parallèle à l'axe de l'avance relative des scies par rapport aux éléments de construction, le V étant ouvert en direction desdits éléments.

Les scies peuvent alors être disposées par paires sur des lignes successives perpendiculaires à l'axe de l'avance, une unique scie étant disposée selon ledit axe au niveau de la pointe du V.

Alternativement, les scies peuvent être disposées selon une seule rangée inclinée par rapport à l'axe d'avance.

En fait, pour permettre une efficacité maximale, en préservant autant que possible un usinage tangentiel, la portion frontale de la scie impliquée dans l'enlèvement de matière correspond au plus à un tiers du diamètre de la scie.

Les configurations évoquées auparavant, en V ou en ligne inclinée, permettent d'usiner avec un rendement maximal des éléments de construction disposés en rangées d'axe perpendiculaire à l'axe de l'avance.

Ces éléments de construction peuvent par exemple être disposés sur une bande de convoyage animée d'une vitesse constante, bande qui se situe en sortie des chambres d'étuvage/séchage. Pour permettre un fonctionnement adéquat dans la ligne principale de fabrication, le temps de calibrage ne doit pas excéder 12 secondes, temps mis par la presse pour mouler un plateau complet de parpaings.

L'invention permet de remplir cet objectif, avec des scies tournant à grande vitesse et entraînées par des moteurs d'une puissance de 4 à 5kw, valeur à comparer avec les moteurs de 30kw utilisés pour les systèmes à fraises.

L'invention va à présent être décrite plus en détail, en référence aux figures annexées, pour lesquelles :
- la figure 1 montre, en vue schématique de côté, l'enlèvement de matière pratiquée par une scie sur un parpaing en vue de calibrer sa hauteur ;
- la figure 2 représente schématiquement, en vue de dessus, une configuration en V des scies circulaires ; et
- la figure 3 montre une variante comportant des scies agencées selon une ligne inclinée par rapport à la direction de l'avance des parpaings.

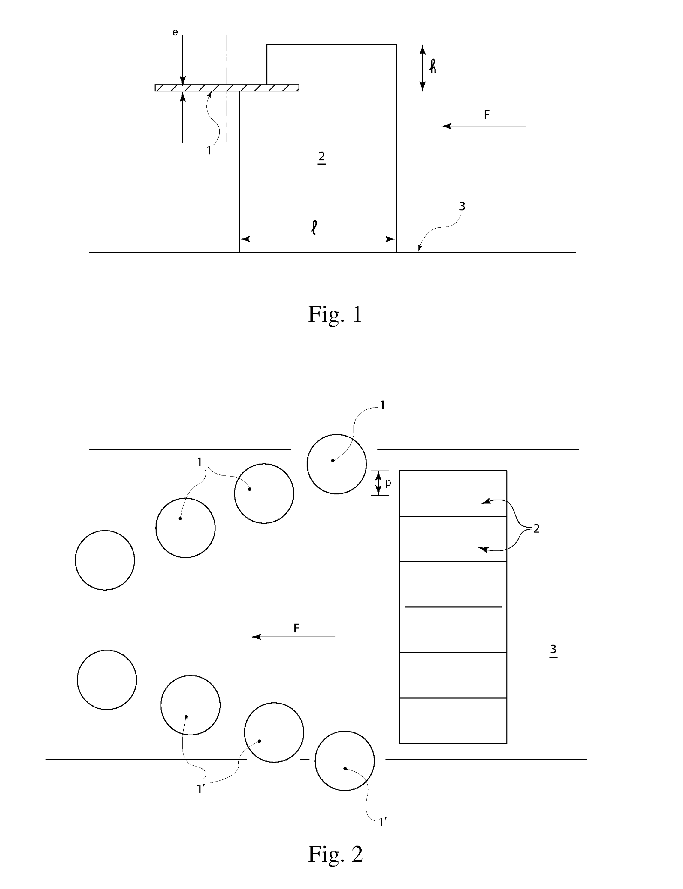

En référence à la figure 1, une scie (1) découpe la partie supérieure d'un parpaing (2) mobile sur une chaîne de convoyage (3). La quantité de matière réellement usinée par chaque scie (1) est égale à l'épaisseur de la scie, par exemple typiquement de l'ordre de 3 mm, multiplié par la longueur (I) du parpaing, et par la dimension de la portion (p) (voir en figure 2) de l'outil (1) qui est en prise avec le parpaing (2).

La quantité de matière étant connue, il est parfaitement possible de calculer à l'avance la puissance des moteurs entraînant en rotation la scie circulaire (1), notamment en fonction de la vitesse de l'avance relative du parpaing (2) par rapport à la scie (1), dans la direction symbolisée par la flèche (F).

Pour pouvoir à la fois bénéficier d'une grande vitesse, de puissances réduites et de la possibilité de conserver les outils (les scies) propres, une approche tangentielle est privilégiée. Ainsi, seule une portion (p) au plus égale à un tiers du diamètre de la scie est impliquée dans l'opération de découpe. Chaque scie (1, 1') doit ensuite être décalée par rapport à celle qui la précède d'un pas égal à (p) permettant un usinage graduel des parpaings (2) en vue de leur calibrage. Dans l'hypothèse où la hauteur (h) du parpaing (2) à usiner est inférieure à l'épaisseur (e) de la scie (1), celle-ci se comporte en gros comme une fraise scie de type 3 tailles. La configuration en V des différentes scies (1, 1') permet un fonctionnement équivalent de chacune, y compris la dernière (non représentée), fonctionnement que l'on peut qualifier de tangentiel. Il n'y a donc plus de travail frontal, comme c'était le cas pour les fraises des systèmes de l'art antérieur. Cette absence de travail frontal, lié à la grande vitesse autorisée pour les scies, permet à celles-ci de rester propre en permanence et d'assurer une qualité constamment égale de l'enlèvement de matière.

La faible épaisseur des scies (1, 1') et leur grande vitesse d'exécution évitent également tout risque de dommage sur les parpaings (2), qui peuvent donc être traités sans avoir subi une longue période de séchage.

Il est ainsi possible de traiter en ligne les parpaings (2), en fait immédiatement à leur sortie d'un dépileur situé lui-même en sortie de l'étape d'étuvage/séchage. De préférence, les parpaings (2) sont disposés en rangs successifs, comme montré en figure 2, leur nombre étant variable et typiquement situé aux alentours de 10-12. Le nombre de scies (1, 1') est, de même, variable selon la valeur que l'on veut donner à (p), le temps imparti à l'étape de calibrage, etc. Comme mentionné auparavant, et afin de ne pas limiter les cadences de la machine, le calibrage doit en principe être effectué en un temps très bref, typiquement inférieur à 12 secondes.

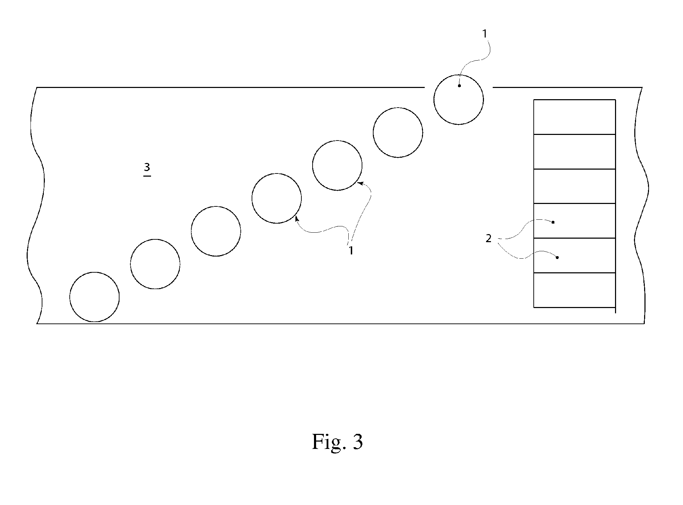

Bien entendu, la configuration qui est montrée en figure 2 n'est pas exhaustive de celles de l'invention, et un agencement des scies (1) tel que montré en figure 3 est par exemple également possible. D'autres configurations, non représentées, sont également possibles pourvu que soit respecté le décalage des scies (1, 1') permettant un fonctionnement séquentiel et équivalent des scies sur une quantité de matière limitée prédéterminée.

## Revendications

1. Dispositif de calibrage en hauteur d'éléments de construction de type parpaings (2) en béton ou autres matériaux comportant au moins un outil d'enlèvement de matière ou d'usinage, les éléments de construction et le ou les outils étant entraînés en vue d'une interaction selon une avance de même direction et de sens opposé, le ou les outils d'enlèvement de matière étant des scies circulaires ou concaves (1) entraînées en rotation pendant la phase d'enlèvement de matière et travaillant avec l'arête tranchante du disque,
**caractérisé en ce que** la vitesse de rotation desdits outils d'enlèvement est supérieure à 5500 tr/min.

2. Dispositif de calibrage selon la revendication précédente, **caractérisé en ce que** les scies circulaires (1) ont une épaisseur comprise entre 2 mm et 8 mm.

3. Dispositif de calibrage selon l'une des revendications précédentes, **caractérisé en ce qu'**il comporte une pluralité de scies (1, 1') agencées l'une à la suite de l'autre dans la direction de l'avance, et d'axe décalé de sorte qu'une portion (p) seulement de la surface frontale de coupe soit active au moment de l'usinage, la distance entre les deux axes des scies (1, 1') placées aux extrémités correspondant au moins à la largeur du ou des éléments de construction (2) à usiner.

4. Dispositif de calibrage selon la revendication précédente, **caractérisé en ce que** les axes des scies sont décalés d'un pas constant (p).

5. Dispositif de calibrage selon l'une des revendications 3 et 4, **caractérisé en ce que** les scies (1, 1') sont disposées en V d'axe de symétrie parallèle à l'axe de l'avance relative des scies (1, 1') par rapport aux éléments de construction, le V étant ouvert en direction desdits éléments.

6. Dispositif de calibrage selon la revendication précédente, **caractérisé en ce que** les scies (1, 1') sont disposées par paires sur des lignes successives perpendiculaires à l'axe de l'avance, une unique scie étant disposée selon ledit axe au niveau de la pointe du V.

7. Dispositif de calibrage selon la revendication 3, **caractérisé en ce que** les scies (1) sont disposées selon une seule rangée inclinée par rapport à l'axe d'avance.

8. Dispositif de calibrage selon l'une quelconque des revendications 3 à 7, **caractérisé en ce que** la portion frontale de la scie (1, 1') impliquée dans l'enlèvement de matière correspond au plus à un tiers du diamètre de la scie (1, 1').

9. Dispositif de calibrage selon l'une quelconque des revendications précédentes, **caractérisé en ce que** les éléments de construction (2) sont disposés en rangées d'axe perpendiculaire à l'axe de l'avance.

10. Dispositif de calibrage selon l'une quelconque des revendications précédentes, **caractérisé en ce que** les éléments de construction (2) sont disposés sur une bande de convoyage (3) animée d'une vitesse constante.
